# EUROPÄISCHE PATENTANMELDUNG

(11) **EP 1 482 189 A1**
(43) Veröffentlichungstag der Anmeldung: **01.12.2004**
(21) Anmeldenummer: 03101508.4
(22) Anmeldetag: 26.05.2003
(51) Int. Cl.: F16C 11/06

(54) **Gelenkanordnung für das Radlager eines Kraftfahrzeuges**

(71) Anmelder: Ford Global Technologies, LLC, A subsidary of Ford Motor Company, Dearborn, MI 48126 (US)
(72) Erfinder: Ohra-aho, Lauri Mikael, 52074 Aachen (DE)
(74) Vertreter: Drömer, Hans-Carsten, Dr.-Ing.

(57) **Zusammenfassung**

Die Erfindung betrifft eine Gelenkanordnung (40) für das Radlager eines Kraftfahrzeuges, welches ein Gehäuseteil (41), ein Mittelteil (42) und ein Innenteil (43) aufweist. Zwischen dem Gehäuseteil (41) und dem Mittelteil (42) ist ein äußeres Gelenk und zwischen dem Mittelteil (42) und dem Innenteil (43) ein inneres Gelenk ausgebildet. Bei den Gelenken kann es sich sowohl um Kugelgelenke als auch um ein Kugelgelenk und ein Rotationsgelenk handeln, wobei die Drehzentren beziehungsweise Rotationsachsen der Gelenke vorzugsweise zusammenfallen beziehungsweise einander schneiden.

## Beschreibung

Die Erfindung betrifft eine Gelenkanordnung für die gelenkige Lagerung von drei Bauteilen sowie ein Radlager für ein Kraftfahrzeug mit einer derartigen Gelenkanordnung.

Im Radlager eines Kraftfahrzeuges findet eine gelenkige Verbindung eines Rades mit der Karosserie statt. Das Rad ist dabei rotationsbeweglich um seine Radachse an einem Radträger, z. B. einem Achsschenkel oder einer Spindel, gelagert. Der Radträger ist seinerseits gelenkig mit verschiedenen weiteren Bauteilen verbunden, z. B. einem Federbein zur gedämpften vertikalen Abstützung und einem Querlenker zur seitlichen Abstützung des Radträgers an der Karosserie. Die gelenkige Befestigung der verschiedenen Bauteile am Achsschenkel erfordert dabei einen verhältnismäßig großen Bauraum.

Aus der WO 02/33275 A1 ist ein Kugelgelenk für ein Radlager bekannt, bei welchem eine Gelenkkugel am Radträger befestigt und in einer Lagerschale mit kugelförmiger Innenfläche gelagert ist. Die Lagerschale ist ihrerseits um ein geringes Stück axial verschiebebeweglich in einem äußeren Gehäuse gefaßt. Auf diese Weise soll der Ausgleich von Toleranzen sowie thermisch bedingten Verschiebungen ermöglicht werden.

Vor diesem Hintergrund war es Aufgabe der vorliegenden Erfindung, Mittel zur kompakten Konstruktion eines Radlagers bereitzustellen, wobei das Radlager vorzugsweise eine hohe Belastbarkeit und Stabilität aufweisen soll.

Diese Aufgabe wird durch eine Gelenkanordnung mit den Merkmalen des Anspruchs 1 sowie durch ein Radlager mit den Merkmalen des Anspruchs 8 gelöst. Vorteilhafte Ausgestaltungen sind in den Unteransprüchen enthalten.

Die erfindungsgemäße Gelenkanordnung dient der wechselseitig gelenkigen Lagerung von drei Bauteilen, d.h. jedes der drei Bauteile ist mittelbar oder unmittelbar gelenkig mit den anderen beiden Bauteilen verbunden. Die Gelenkanordnung enthält im Wesentlichen drei Bestandteile, nämlich
a) ein mit einem ersten Bauteil verbindbares Gehäuseteil;
b) ein mit einem zweiten Bauteil verbindbares Mittelteil, welches zusammen mit dem Gehäuseteil ein "äußeres" Gelenk bildet;
c) ein mit einem dritten Bauteil verbindbares Innenteil, welches zusammen mit dem Mittelteil ein "inneres" Gelenk bildet.

Die Gelenkanordnung ist ferner dadurch gekennzeichnet, daß die Drehzentren (bei Kugelgelenken) und/oder die Rotationsachsen (bei Rotations- beziehung s-weise Scharniergelenken) des inneren und des äußeren Gelenkes nahe beieinander liegen. Insbesondere können die beiden Punkte kürzesten Abstandes zwischen den genannten Drehzentren/Rotationsachsen innerhalb des Gehäuseteils liegen. Besonders bevorzugt ist es, wenn sich die genannten Drehzentren/Rotationsachsen schneiden oder wenn diese zusammenfallen, d. h., wenn z.B. ein Drehzentrum des einen Gelenkes auf der Rotationsachse des anderen Gelenkes liegt.

Durch die beschriebene Gelenkanordnung werden auf engstem Räume beziehungsweise quasi im selben Raumpunkt drei unterschiedliche Bauteile wechselseitig gelenkig miteinander verbindbar. Die Gelenkanordnung eignet sich daher für Anwendungen mit einer erforderlichen hohen Packungsdichte der Bauteile. Des Weiteren führt die große Nähe der Gelenkzentren zu kurzen Hebelwegen bei der Kraftübertragung zwischen den verschiedenen Bauteilen, was der Belastbarkeit und der Stabilität der Gelenkanordnung zugute kommt.

Für die konkrete Ausgestaltung des inneren und des äußeren Gelenkes gibt es verschiedene Möglichkeiten. Insbesondere kann jedes dieser Gelenke ein Kugelgelenk mit drei Freiheitsgraden oder ein Rotationsgelenk beziehungsweise Scharniergelenk mit einem Freiheitsgrad sein. Besonders bevorzugt ist es, wenn die Gelenkanordnung die Kombination eines Kugelgelenkes mit einem Rotationsgelenk enthält.

Die Befestigung der gelenkig miteinander zu verbindenden Bauteile an der Gelenkanordnung kann auf unterschiedliche Arten erfolgen. Je nach Anwendungsfall können die Bauteile zum Beispiel einstückig mit dem Gehäuseteil, dem Mittelteil und/oder dem Innenteil ausgebildet sein. Weiterhin können das Gehäuseteil, das Mittelteil und/oder das Innenteil Anschlußfahnen bzw. Flansche aufweisen, an welchen die zu koppelnden Bauteile durch Schrauben, Schweißen oder dergleichen befestigt werden können.

Die Erfindung betrifft weiterhin ein Radlager für ein Kraftfahrzeug, welches dadurch gekennzeichnet ist, daß dieses eine Gelenkanordnung der vorstehend erläuterten Art aufweist. Durch die kompakte Bauweise der Gelenkanordnung kann auch das Radlager mit geringem Platzbedarf realisiert werden. Des Weiteren wird auf diese Weise eine stabile Konstruktion erhalten, die die an einem Radlager auftretenden hohen Kräfte aufnehmen kann.

Vorzugsweise ist bei dem Radlager das Innenteil der Gelenkanordnung mit dem Radträger des Radlagers verbunden oder als solcher Radträger ausgebildet. Der Radträger lagert das Rad des Kraftfahrzeuges drehbeweglich um dessen Radachse. Der Radträger kann beispielsweise als Achsschenkel oder als eine Spindel ausgebildet sein.

Das Mittelteil der Gelenkanordnung ist bei dem Radlager vorzugsweise mit einem Federbein verbunden, welches für eine elastische und gedämpfte vertikale Abstützung des Radlagers an der Karosserie sorgt.

Ferner ist das Gehäuseteil der Gelenkanordnung des Radlagers vorzugsweise mit einem Querlenker verbunden, welcher seinerseits an der Karosserie des Fahrzeugs angelenkt ist und für eine horizontale Abstützung sorgt.

Im Folgenden wird die Erfindung anhand der Figuren beispielhaft näher erläutert.

### Es zeigen:

- Fig. 1: einen Querschnitt durch eine erste Ausführungsform einer Gelenkan- ordnung mit einem äußeren Kugelgelenk und einem inneren Rotations- gelenk;
- Fig. 2: einen Querschnitt durch eine zweite Ausführungsform einer Gelenkanordnung mit einem äußeren Rotationsgelenk und einem inneren Kugelgelenk;
- Fig. 3: einen Querschnitt durch eine dritte Ausführungsform einer Gelenkanordnung mit zwei ineinander geschachtelten Kugelgelenken;
- Fig. 4: eine vierte Ausführungsform einer Gelenkanordnung in einem Querschnitt (links) und einer perspektivischen Ansicht (rechts) mit zwei ineinander geschachtelten Kugelgelenken.

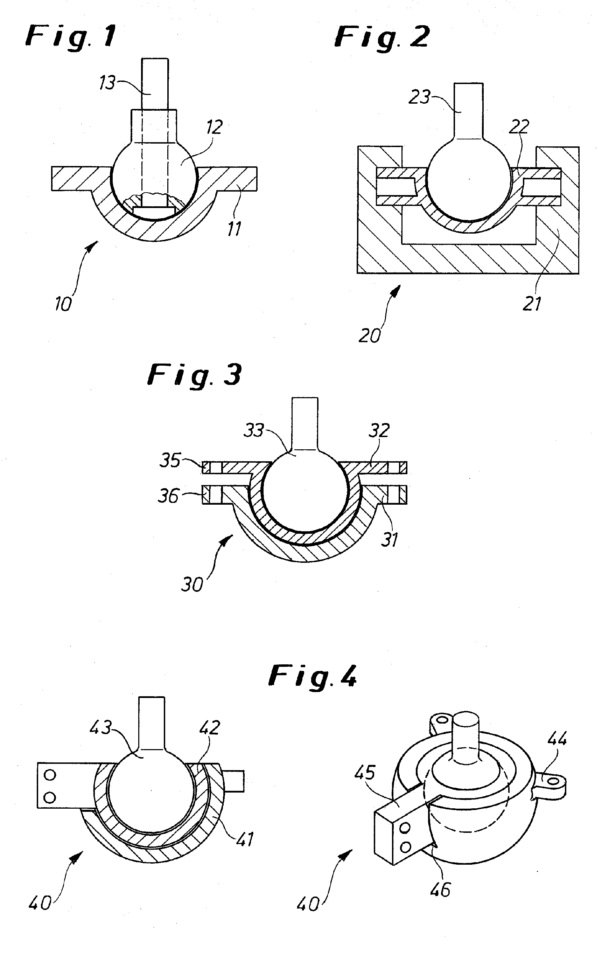

Die erfindungsgemäßen Gelenkanordnungen können prinzipiell für die wechselseitig gelenkige Verbindung von drei Bauteilen jeglicher Art verwendet werden. Vorzugsweise finden sie Verwendung für die Ausbildung des Radlagers eines Kraftfahrzeuges. Charakteristisch für die Gelenkanordnungen ist, daß diese in quasi demselben Raumpunkt zwei ineinander verschachtelte Gelenke kombinieren. In den Figuren 1 bis 4 sind dabei verschiedene bevorzugte Ausführungsformen der Gelenkanordnung dargestellt.

So zeigt Figur 1 in einem Querschnitt eine erste Gelenkanordnung 10, bei welcher das Mittelteil 12 der Gelenkanordnung außen eine Gelenkkugel aufweist, welche in dem korrespondierenden hohlkugelförmigen Lager des Gehäuseteils 11 gelagert ist. Innerhalb des Mittelteils 12 ist drehbeweglich um seine Längsachse ein Innenteil 13 gelagert. Zwischen Gehäuseteil 11 und Mittelteil 12 ist somit ein Kugelgelenk und zwischen Mittelteil 12 und Innenteil 13 ein Rotationsgelenk ausgebildet.

Bei einer in der Figur nicht näher dargestellten Verwendung der Gelenkanordnung 10 im Radlager eines Kraftfahrzeuges kann beispielsweise am Innenteil 13 der das Rad tragende Achsschenkel, am Mittelteil 12 das sich an der Karosserie abstützende Federbein, und am Gehäuseteil 11 der an der Karosserie angelenkte Querlenker befestigt sein. Eine derartige Nutzungsmöglichkeit der Gelenkanordnung gilt prinzipiell auch für die in den Figuren 2 bis 4 dargestellten alternativen Ausführungsformen. Der kompakte Aufbau der Gelenkanordnung 10 ermöglicht dabei eine Platz sparende Konstruktion des Radlagers. Weiterhin verbessert die Gelenkanordnung die Fähigkeiten zur Lastaufnahme des Radlagers bei einer Verringerung des Baugewichtes. Ferner wird die Stabilität beziehungsweise Steifheit der erhaltenen Struktur erhöht, da seitliche Belastungen unmittelbar auf die tragenden Bauteile (d.h. den Querlenker) übertragen werden können, anstatt durch andere Bauteile wie etwa den Achsschenkel verlaufen zu müssen.

Figur 2 zeigt eine zweite Ausführungsform einer Gelenkanordnung 20, bei welcher das Mittelteil 22 zwei diametral abstehende Gelenkzapfen aufweist, die in entsprechenden Gelenkbuchsen des Gehäuseteils 21 drehbeweglich gelagert sind. Des Weiteren besitzt das Mittelteil 22 eine hohlkugelförmige Ausnehmung, in welcher die korrespondierende Gelenkkugel des Innenteils 23 gelagert ist. Zwischen dem Innenteil 23 und dem Mittelteil 22 wird somit ein Kugelgelenk und zwischen dem Mittelteil 22 und dem Gehäuseteil 21 ein Rotationsgelenk ausgebildet.

Figur 3 zeigt einen Querschnitt durch eine dritte Ausführungsform einer Gelenkanordnung 30, wobei das Mittelteil 32 teilweise als eine Kugelschale ausgebildet ist.

Im Inneren dieser Kugelschale ist die Gelenkkugel des Innenteils 33 gelagert, während die kugelförmige Außenseite des Mittelteils 32 in einem korrespondierenden Hohlkugelraum des Gehäuseteils 31 gelagert ist. Zwischen dem Innenteil 33 und dem Mittelteil 32 sowie zwischen dem Mittelteil 32 und dem Gehäuseteil 31 wird somit jeweils ein Kugelgelenk ausgebildet.

Des Weiteren sind in Figur 3 Anschlußfahnen beziehungsweise Flansche 35, 36 am Mittelteil 32 und am Gehäuseteil 31 erkennbar, welche Schraublöcher zur Schraubbefestigung von Bauteilen eines Radlagers aufweisen.

In Figur 4 ist in einem Schnitt (links) und in einer Perspektive (rechts) eine gegenüber Figur 3 etwas abgewandelte Ausführungsform einer Gelenkanordnung 40 dargestellt. Der wesentliche Unterschied zu der Gelenkanordnung 30 von Figur 3 besteht darin, daß das Mittelteil 42 eine Anschlußfahne 45 aufweist, die durch einen im Gehäuseteil 41 ausgebildeten Schlitz 46 nach außen verläuft. Je nach Dimensionierung des Schlitzes 46 kann auf diese Weise die Beweglichkeit des Mittelteils 42 relativ zum Gehäuseteil 41 in gewünschter Weise beschränkt werden. Wenn die Breite des Schlitzes 46 in etwa der Dicke der Anschlußfahne 45 entspricht, wird die Beweglichkeit des Mittelteils 42 gegenüber dem Gehäuseteil 41 im Wesentlichen auf einen Freiheitsgrad reduziert.

Zwischen dem Innenteil 43 und dem Mittelteil 42 ist ebenso wie bei Figur 3 ein Kugelgelenk ausgebildet. Des Weiteren sind in Figur 4 Anschlußfahnen 44 am Gehäuseteil 41 erkennbar, an welchen Bauteile eines Radlagers wie beispielsweise ein Querlenker befestigt werden können.

## Patentansprüche

1. Gelenkanordnung (10-40) für die wechselseitig gelenkige Lagerung von drei Bauteilen, enthaltend
a) ein mit einem ersten Bauteil verbindbares Gehäuseteil (11-41);
b) ein mit einem zweiten Bauteil verbindbares Mittelteil (12-42), welches zusammen mit dem Gehäuseteil (11-41) ein äußeres Gelenk bildet;
c) ein mit einem dritten Bauteil verbindbares Innenteil (13-43), welches zusammen mit dem Mittelteil (12-42) ein inneres Gelenk bildet,
wobei die Drehzentren und/oder Rotationsachsen von innerem und äußerem Gelenk nahe beieinander liegen.

2. Gelenkanordnung nach Anspruch 1,
**dadurch gekennzeichnet, daß** die Drehzentren und/oder Rotationsachsen von innerem und äußerem Gelenk zusammenfallen oder einander schneiden.

3. Gelenkanordnung nach Anspruch 1 oder 2,
**dadurch gekennzeichnet, daß** das äußere Gelenk als Kugelgelenk (KG) ausgebildet ist.

4. Gelenkanordnung nach Anspruch 1 oder 2,
**dadurch gekennzeichnet, daß** das äußere Gelenk als Rotationsgelenk (RG) ausgebildet ist.

5. Gelenkanordnung nach mindestens einem der Ansprüche 1 bis 4,
**dadurch gekennzeichnet, daß** das innere Gelenk als Kugelgelenk (KG) ausgebildet ist.

6. Gelenkanordnung nach mindestens einem der Ansprüche 1 bis 4,
**dadurch gekennzeichnet, daß** das innere Gelenk als Rotationsgelenk (RG) ausgebildet ist.

7. Gelenkanordnung nach mindestens einem der Ansprüche 1 bis 6,
**dadurch gekennzeichnet, daß** das Gehäuseteil (31, 41), das Mittelteil (32, 42) und/oder das Innenteil Anschlußfahnen (34, 35, 44, 45) zur Befestigung von Bauteilen aufweisen.

8. Radlager für ein Kraftfahrzeug,
**dadurch gekennzeichnet, daß** dieses eine Gelenkanordnung nach mindestens einem der Ansprüche 1 bis 7 aufweist.

9. Radlager nach Anspruch 8,
**dadurch gekennzeichnet, daß** das Innenteil (11-41) der Gelenkanordnung den Radträger des Radlagers bildet oder hieran befestigt ist.

10. Radlager nach Anspruch 8 oder 9,
**dadurch gekennzeichnet, daß** das Mittelteil (12-42) der Gelenkanordnung mit einem Federbein verbunden ist.

11. Radlager nach mindestens einem der Ansprüche 8 bis 10,
**dadurch gekennzeichnet, daß** das Gehäuseteil (13-43) der Gelenkanordnung mit einem Querlenker verbunden ist.
